# EUROPÄISCHE PATENTSCHRIFT

(11) **EP 3 161 429 B1**
(45) Veröffentlichungstag und Bekanntmachung des Hinweises auf die Patenterteilung: **17.02.2021**
(21) Anmeldenummer: 15730813.1
(22) Anmeldetag: 24.06.2015
(51) Int. Cl.: G01G 19/02, G08G 1/02, G08G 1/015

(54) **VERFAHREN UND VORRICHTUNG ZUR ÜBERPRÜFUNG DES BELADUNGSGEWICHTES EINES LKW**
METHOD AND DEVICE FOR VERIFYING THE PAYLOAD OF A TRUCK
PROCÉDÉ ET DISPOSITIF PERMETTANT DE VÉRIFIER LE POIDS DE CHARGEMENT D'UN CAMION

(30) Priorität: 24.06.2014 AT 4982014
(43) Veröffentlichungstag der Anmeldung: 03.05.2017
(73) Patentinhaber: Batsch Waagen & EDV GmbH & Co KG, 3382 Loosdorf (AT)
(72) Erfinder: BATSCH, Hans-Heinz, A-3082 Loosdorf (AT)
(74) Vertreter: Puchberger & Partner Patentanwälte
(86) Internationale Anmeldenummer: PCT/EP2015/064211
(87) Internationale Veröffentlichungsnummer: WO 2015/197668

(56) Entgegenhaltungen:
- WO-A1-2009/109158
- DE-A1-102005 055 663
- DE-U1-202014 002 729
- US-A1- 2011 267 200

## Beschreibung

Die Erfindung bezieht sich auf ein Verfahren und eine Vorrichtung zur Überprüfung des Beladungsgewichtes eines LKWs auf Zulässigkeit mittels einer dynamischen Fahrzeugwaage mit mehreren hintereinander angeordneten Wägezellen und einem Fahrzeugerkennungssystem, wobei durch das Fahrzeugerkennungssystem der Fahrzeugtyp ermittelt wird, und danach die durch die dynamische Fahrzeugwaage ermittelten Achsdruckdaten mit jenen dem Fahrzeugtyp zugeordneten Daten verglichen werden.

Im Hinblick auf die Verkehrssicherheit ist es notwendig, Lastkraftwagen nicht nur auf den technischen Zustand zu überprüfen sondern auch darauf, ob das zulässige Gesamtgewicht bzw. die zulässigen Achsdrücke des beladenen Fahrzeuges nicht überschritten werden, da überladene Fahrzeuge vor allem beim Bremsen Probleme bekommen können, weil die Bremsen nur für ein bestimmtes Fahrzeuggesamtgewicht ausgelegt sind. Darüber hinaus wird dadurch die Haltbarkeit der Straßen enorm erhöht.

Eine dynamische Fahrzeugwaage mit mehreren hintereinander angeordneten Wägezellen und einem Fahrzeugerkennungssystem ist beispielsweise in WO 2011/110524 A1 veröffentlicht. Bei dieser dynamischen Fahrzeugwaage sind die im Niveau der Fahrzeugdecke liegenden Platten über wenigstens zwei entlang einer Längskante der Platte angeordneten Kraftsensoren und wenigstens zwei entlang der gegenüberliegenden Längskante der Platte angeordneten Lager an dem alle Messmodule aufnehmenden Wannenboden abgestützt.
Mit diesen dynamischen Fahrzeugwaagen ist es möglich, Fahrzeuge beim Überfahren der Waage zu wiegen, wobei die einzelnen Achsdrücke zur Ermittlung des Gesamtgewichtes herangezogen werden. Bei dieser bekannten Ausbildung war jedoch eine manuelle Auswertung vorgesehen, wobei zur Erzielung einer eichgenauen Wägung es erforderlich war, das Fahrzeug auf eine statische Waage fahren zu lassen und dort zu wiegen. Dies ist langsam und erfordert manuelle Interaktion.

Die DE 10 2005 055663 A1 zeigt ein herkömmliches Verfahren zur Überprüfung des Beladungsgewichtes eines Fahrzeugs mittels einer dynamischen Fahrzeugwaage und einem optischen Fahrzeugerkennungssystem. Die US 2011/267200 A1 zeigt optische Fahrzeugwaage. DE 20 2014 002 729 U1 beschreibt ein Verfahren zu Überprüfung des Beladungsgewichts eines LKW, bei dem induktive Klassifizierungsschleifen verwendet werden.

Zur Ermöglichung einer raschen Auswertung der beim Überfahren der Waage ermittelten Daten ist erfindungsgemäß vorgesehen, dass durch ein Fahrzeugerkennungssystem der Fahrzeugtyp ermittelt wird und danach die durch die dynamische Fahrzeugwaage ermittelten Achsdruckdaten mit jenen dem Fahrzeugtyp zugeordneten Daten verglichen werden. Induktive Klassifizierungsschleifen dienen dabei der Aufnahme des Fahrzeugunterbodenmusters, insbesondere der Anzahl und dem Abstand der Achsen, welche zur Klassifizierung des Fahrzeugs herangezogen werden. Optional können neben den Achsdruckdaten auch die jeweiligen Achslasten und das Gesamtgewicht des Fahrzeugs mit den dem Fahrzeugtyp zugeordneten Daten verglichen werden.

Damit ist es möglich, ohne visuelle Einsichtnahme in die Autopapiere zu ermitteln, ob das für diesen Fahrzeugtyp zulässige Gesamtgewicht überschritten ist oder nicht. Ist das zulässige Gesamtgewicht nicht überschritten, dann wird das Fahrzeug ohne weitere Prüfung wieder in den Verkehrsstrom rückgeführt. Ist hingegen aufgrund der Messungen der dynamischen Waage das Fahrzeug überladen, dann wird dieses auf einen speziellen Parkplatz ausgeleitet und dort im Detail überprüft.

Vorteilhafterweise können die dem Fahrzeugtyp zugeordneten Daten durch Prüfen des Fahrzeugkennzeichens und Rückfrage bei der Zulassungsbehörde ermittelt werden. Damit wird eine rasche zuverlässige Auskunft über das zulässige Gesamtgewicht von offizieller Seite her erhalten.

Dabei kann das Kennzeichnungserkennungssystem integriert und auf optischer Basis sein, wobei bei Durchfahrt des Fahrzeuges das Kennzeichen des Zugfahrzeugs und auch jenes des Hängers optisch erfasst und in einem Überprüfungssystem gespeichert werden. Das Überprüfungssystem betätigt daraufhin die Online-Schnittstelle zur Zulassungsbehörde oder zu einem Datenbanksystem und dort können aufgrund der ermittelten Kennzeichen die registrierten Daten des Fahrzeugs in das Überprüfungssystem eingebunden werden.

Dabei werden die Daten eines Zugfahrzeugs und des zugehörigen Anhängers miteinander verschmolzen und ergeben so die Prüfdaten des Überprüfungssystems.

Aus der Abfrage werden damit folgende Daten gewonnen: Höchstzulässiges Gesamtgewicht des Fahrzeuges; Achsgewichte des Fahrzeuges; Anzahl der Achsen.

Sofern das Fahrzeug über 3,5 Tonnen Gesamtgewicht aufweist, muss es für den Verkehr in Österreich eine sogenannte Go-Box besitzen. Erfindungsgemäß ist vorgesehen, dass die Fahrzeugdaten durch Auslesen der Go-Box ermittelt werden können. Aufgrund einer Durchfahrt unter einem Überkopfscanner wird ermittelt, ob das Fahrzeug eine Go-Box (Mauterfassungssystem) montiert und aktiviert hat. Dadurch erfolgt bereits eine Unterscheidung der Fahrzeuge mit kleiner/größer als 3,5 Tonnen höchstzulässiges Gesamtgewicht. Weiters kann durch diesen Lesevorgang auch die eingestellte Achszahl und das polizeiliche Kennzeichen der Go-Box ausgelesen werden. Diese Daten werden in dem Überprüfungssystem gespeichert. Aufgrund von länderspezifischen Unterschieden im Mautsystem können auch zusätzliche Daten dem Überprüfungssystem zugeführt werden.

Erfindungsgemäß ist vorgesehen, dass zur Ermittlung des Fahrzeugtyps das Fahrzeug seitlich fotografiert und mit in einer Datenbank vorhandenen Fahrzeugbildern verglichen werden kann, wodurch eine rasche Fahrzeugidentifizierung ermöglicht wird.

Bei Fahrzeugen die weder im Inland zugelassen noch mit einer Go-Box oder einem anderen Mautauslesesystem ausgerüstet sind, können die dem Fahrzeugtyp zugeordneten Daten durch Zählen der Achspaare und Prüfung der gegenseitigen Distanz ermittelt werden, wobei der zulässige Achsdruck einer gesetzlichen Norm entnommen werden kann. Insbesondere kann der zulässige Achsdruck gemäß Kraftfahrgesetz 1967, § 4, Abs. 6, 7a, 7b, 8 und 9 bzw. EU Richtlinie 96/53 EG geregelt sein.

Optional können neben den Achsdruckdaten auch die jeweiligen Achslasten und das Gesamtgewicht des Fahrzeugs der gesetzlichen Norm entnommen werden. Erfindungsgemäß kann weiters vorgesehen sein, dass die Anzahl der Achspaare mittels einer optischen Erfassungseinrichtung bestimmt werden. Mit dieser optischen Erfassungseinrichtung kann insbesondere mittels eines Laserabtastsystems, eines Infrarotsystems oder induktiver Sensoren die Anzahl der Achspaare und deren Position ermittelt werden.

Damit wird eine zuverlässige Ermittlung sowohl der Anzahl der Achsen als auch deren Abstand und Anordnung erzielt, was für die genaue Erfassung des Fahrzeugtyps hilfreich ist.

Erfindungsgemäß wird die gegenseitige Distanz der Achspaare durch die mehrere Wägezellen hintereinander aufweisende dynamische Fahrzeugwaage anhand der jeweils belasteten Wägezellen ermittelt. Dies erfolgt dabei durch Zuordnung des Auflagepunktes des Fahrzeugreifens auf den jeweiligen Tragplatten dadurch, dass die Druckbeaufschlagung der Platten im Hinblick darauf, dass die Platten an einer Längskante überlagert gehalten sind und an der anderen die Druckmesssensoren vorgesehen sind, aufgrund der Hebelgesetze, wobei ein entsprechender Verlauf der Druckkurve auftritt, und wobei entsprechend dem jeweiligen Druck die Lage des Druckpunktes in Bezug auf die Druckverlaufskurve genau ermittelt werden kann. Damit kann die Lage des Auflagepunktes des Fahrzeugreifens auf der jeweiligen Wägezelle durch Vergleich mit dem zugeordneten Belastungskurvenverlauf ermittelt werden.

Schließlich können die Daten, die den Fahrzeugen zugeordnet werden, in einer gesonderten speziellen Datenbank gespeichert werden. Derartige Datenbanken können, z. B. von autorisierten Behörden usw., eingesehen werden, um unter anderem auch zu überprüfen, ob noch weitere Prüfungen und Delikte eingetragen sind, bzw. ob von anderen Verkehrsüberprüfungsplätzen zentral zur Ermittlung von Wiederholungsfällen Daten eingesandt wurden.

In der Zeichnung ist ein Ausführungsbeispiel des Erfindungsgegenstandes dargestellt. Fig. 1 zeigt schematisch die Anordnung einer erfindungsgemäßen Ausführungsform der Vorrichtung an einer Autobahn; Fig. 2a und 2b geben eine erfindungsgemäße Ausführungsform des Verfahrens wieder; Fig. 3 zeigt eine weitere Ausführungsform einer erfindungsgemäßen Vorrichtung; Fig. 4a - 4e zeigen eine weitere Ausführungsform eines erfindungsgemäßen Verfahrens.

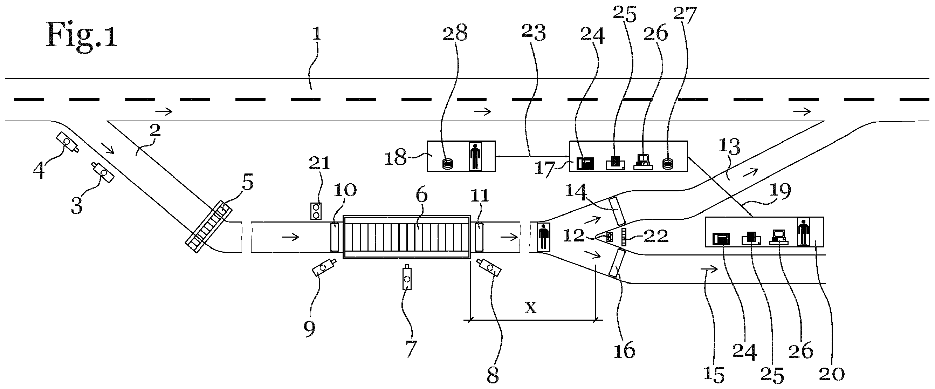

Fig. 1 zeigt eine erfindungsgemäße Ausführungsform der Messvorrichtung an einer Autobahn. Mit 1 ist eine Autobahn bezeichnet, von welcher eine Ausleitungsfahrbahn 2 wegführt. An dieser Ausleitungsfahrbahn 2 ist eine vordere Kennzeichenkamera 3 und eine hintere Kennzeichenkamera 4 vorgesehen. Weiters ist ein Überkopfscanner 5 zum Lesen der Go-Box eines durchfahrenden Autos angeordnet. Die Fahrzeuge werden über diese Ausleitungsfahrbahn dann zur dynamischen Waage 6 geführt, an welcher eine Kamera 7 zur Achsenerkennung und eine weitere vordere Kennzeichenkamera 8 und eine hintere Kennzeichenkamera 9 vorgesehen sind. Bei der dynamischen Waage 6 kann es sich insbesondere um eine dynamische Fahrzeugwaage HHB01 des Unternehmens Batsch Waagen und EDV-Systeme GmbH & Co KG handeln.

Mit der Kamera 7 kann auch das gesamte Fahrzeug fotografiert werden, wonach dann das angefertigte Foto anhand von speziellen Kernpunkten mit in einer Datenbank gespeicherten Fahrzeugbildern verglichen wird. An der dynamischen Waage 6 sind eine Einfahrtsschleife 10 und eine Ausfahrtsschleife 11 angeordnet. Die Einfahrtsschleife 10 und Ausfahrtsschleife 11 können als induktive Schleifen ausgeführt sein. Die mit der dynamischen Fahrzeugwaage 6 ermittelten Daten werden dann entweder durch Rückfrage hinsichtlich des Kennzeichens bei der Zulassungsbehörde bzw. durch Rückfrage bei der die Go-Box betreibenden Behörde genau definiert, wonach dann aufgrund des ermittelten Fahrzeugtyps das höchstzulässige Gesamtgewicht in Erfahrung gebracht wird. Wenn nun das über die dynamische Fahrzeugwaage 6 fahrende Fahrzeug ein Gesamtgewicht aufweist, das innerhalb des höchsten zulässigen Gesamtgewichts liegt, dann wird das Fahrzeug mittels der Richtungsampel 12 auf die Ausfahrtsfahrbahn 13 geleitet, wobei das ordnungsgemäße Überfahren der Fahrzeuges durch die Schleife 14 überprüft wird.

Die Distanz x zwischen dem Ende der dynamischen Fahrzeugwaage 6 und der Richtungsaufteilung sollte mindestens 60m betragen. Um eine visuelle Sichtkontrolle zu ermöglichen, kann nach der dynamischen Waage 6 ein visuelles Kontrollorgan 31 vorgesehen sein.

Sollte das von der dynamischen Fahrzeugwaage 6 gemessene Gesamtgewicht das dem ermittelten Fahrzeugtyp zugeordnete höchstzulässige Gesamtgewicht übersteigen bzw. eine Fehlermeldung vom System abgegeben werden, dann wird das Kraftfahrzeug mittels der Richtungsampel 12 in die Ausfahrtsfahrbahn 15 geleitet, wobei das ordnungsgemäße Überfahren durch die Schleife 16 ermittelt wird. Diese Ausfahrtsfahrbahn 15 führt dann zu einer Prüfstelle in einem Gebäude 20 zur visuellen Kontrolle des Fahrzeugs durch Beamte, bei welcher die Fahrzeugdaten mittels des Fahrzeugbriefes und dergleichen genau ermittelt werden.

Der dynamischen Fahrzeugwaage 6 zugeordnet ist ein vor Ort befindliches Gebäude 17, in welchem eine Gewichtsanzeige 24, ein Drucker 25, ein entsprechender PC 26 und eine Datenbank 27 vorhanden sind. In Verbindung mit diesen Geräten steht eine externe Datenbankzentrale 18 mit einer Datenbank 28, mit welcher über einen Datenexport und eine Statistik per Internet die gemessenen Daten abgeglichen werden können. Die Verbindung des Gebäudes 17 mit der externen Datenbankzentrale 18 erfolgt über eine Datenleitung 23 oder das Internet.

Weiters steht das Gebäude bzw. die darin vorhandenen Installationen über eine Datenleitung 19 mit einem zweiten Gebäude 20 vor Ort in Verbindung und zwar mit jenem, welches der genauen Überprüfung der über die Ausfahrtsfahrbahn 15 abgeleiteten Fahrzeuge zugeordnet ist. Im Gebäude 20 ist ebenfalls eine Gewichtsanzeige 24, ein Drucker 25, ein entsprechender PC 26 und gegebenenfalls ein Kontrollorgan vorgesehen.

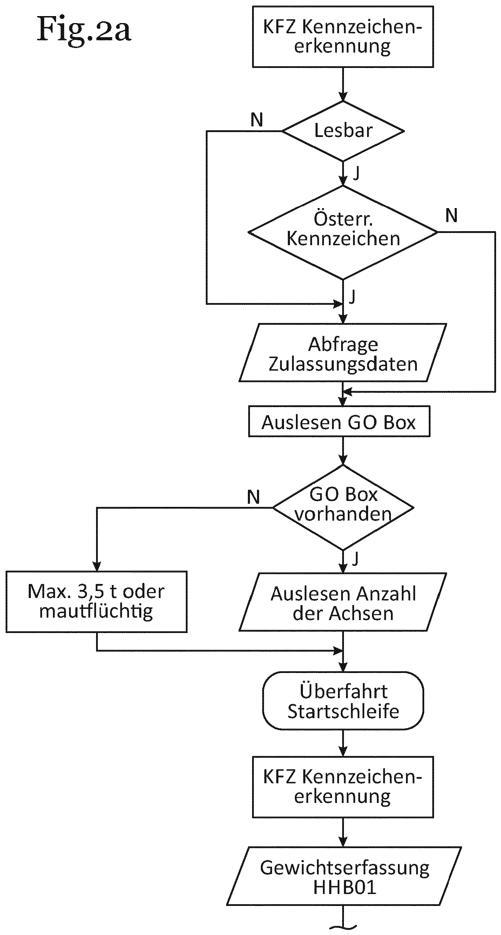

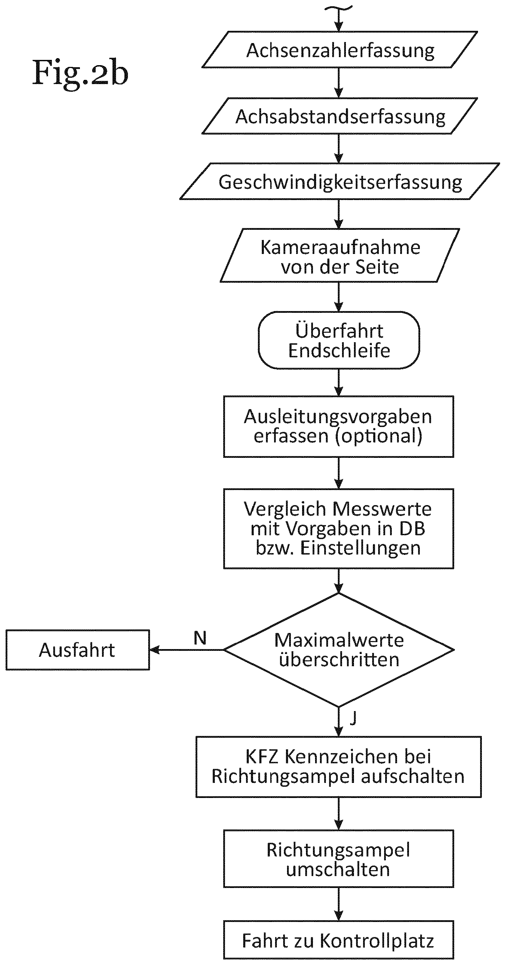

In den Figuren 2a und 2b, welche ein erstes Ausführungsbeispiel eines erfindungsgemäßen Verfahrensablaufs wiedergeben, ist der logische Aufbau der mit der Anlage gemäß Fig. 1 verbundenen Datenanlage sowie der entsprechende Verfahrensablauf wiedergegeben. Im ersten Schritt des Verfahrensablaufs gemäß des Ausführungsbeispiels in Fig. 2a - 3b erfolgt die Erkennung des vorderen und hinteren Kennzeichens durch die vordere Kennzeichenkamera 3 und die hintere Kennzeichenkamera 4. Sind die Kennzeichen lesbar, und handelt es sich um ein Kennzeichen eines Landes, dessen Zugangsdaten abfragbar sind, so erfolgt eine Abfrage der Zulassungsdaten.

Im vorliegenden Ausführungsbeispiel wird von einem österreichischen Kennzeichen ausgegangen. Aus der Abfrage der Zulassungsdaten ergeben sich zumindest die maximalen Achslasten und die maximale Höchstlast des Fahrzeugs. Danach erfolgt, sofern ein solches vorhanden ist, die Auslesung eines am Fahrzeug installierten Mauterfassungssystems, insbesondere einer Go-Box, durch eine elektronische Auslesevorrichtung, nämlich den Überkopfscanner 5, wobei aus den Daten dieses Mauterfassungssystems insbesondere die Anzahl der eingestellten Achsen ausgelesen wird. In der Go-BOx ist auch das Kfz-Kennzeichen hinterlegt, welches ausgelesen und mit dem von der Kamera ermittelten Kennzeichen verglichen werden kann.

Wenn die Ampel 21 die dynamische Fahrzeugwaage 6 freigibt, überfährt das Fahrzeug die Einfahrtschleife 10 (Startschleife), und es erfolgt neuerlich eine Erkennung des vorderen und hinteren Kennzeichens durch die Kennzeichenkameras 8, 9 sowie in Folge die Gewichtserfassung durch die dynamische Fahrzeugwaage 6 am fahrenden Fahrzeug. Diese eichfähige Gewichtserfassung liefert die tatsächliche Achslast und die tatsächliche Gesamtmasse des Fahrzeugs.

Es erfolgt weiters durch die dynamische Fahrzeugwaage HHB01 bzw. die Kamera mit Achserkennung 7 eine Erkennung der Anzahl der tatsächlichen Achsen des Fahrzeugs, der tatsächlichen Achsabstände, sowie der Geschwindigkeit des Fahrzeugs. Durch die Kamera mit Achserkennung 7 erfolgt eine Aufnahme des Fahrzeugs von der Seite zur Feststellung der Achsmuster (Achsabstände) und der Silhouette, also insbesondere Höhe und Länge, des Fahrzeuges. Das Fahrzeug ist während der gesamten Messung in Bewegung und überfährt schließlich die Ausfahrtschleife (Endschleife) 11. Statt einer seitlichen Kamera kann auch eine Übersichtskamera vorgesehen sein.

In einem optionalen Verfahrensschritt werden Ausleitungsvorgaben erfasst, so kann vorgesehen sein, dass bestimmte Fahrzeuge automatisch ausgeleitet werden.

Danach werden die von der Fahrzeugwaage bzw. der Kamera aufgenommenen Messwerte mit den in der Datenbank hinterlegten Vorgaben bzw. Einstellungen verglichen. Wurden die hinterlegten Maximalwerte nicht überschritten, so wird das Fahrzeug durch die Richtungsampel 12 auf die Ausfahrtsfahrbahn innerhalb Toleranz 13 geleitet.

Wurden die Maximalwerte, gegebenenfalls unter Berücksichtigung eines Schwellwertes, überschritten, so wird das Fahrzeug über die Richtungsampel 12 auf die Ausfahrtsfahrbahn außerhalb Toleranz 15 zu einem Kontrollplatz mit visueller Kontrolle des Fahrzeugs durch einen Beamten geleitet. Optional kann statt durch die Richtungsampel 12 auch eine visuelle Ausleitung durch Stichproben erfolgen.

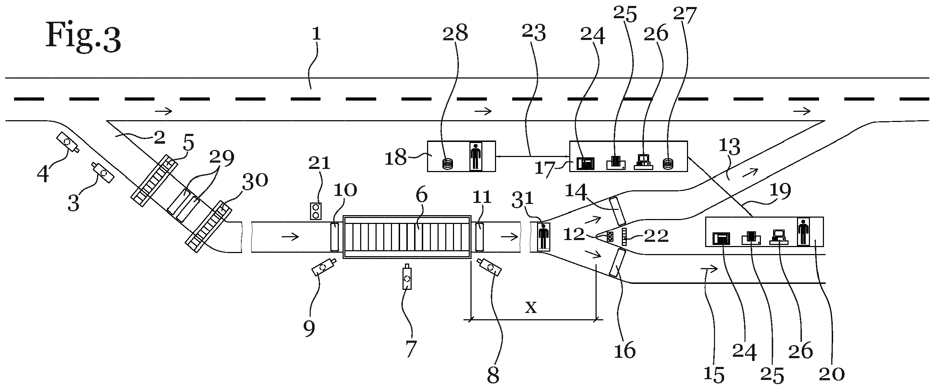

Fig. 3 zeigt ein weiteres Ausführungsbeispiel eines schematischen Aufbaus zur Durchführung des erfindungsgemäßen Verfahrens. Der Aufbau entspricht dem Ausführungsbeispiel aus Fig. 1, wobei jedoch in der Ausleitungsfahrbahn 2 nach der Auslesung eines eventuell vorhandenen Mauterfassungssystems (Go-Box) durch den Überkopfscanner 5 mehrere zusätzliche Klassifizierungsschleifen 29 vorgesehen sind. Bei diesen Klassifizierungsschleifen 29 kann es sich um mehrere, insbesondere zwei, induktive, in die Fahrbahn eingelassene Schleifen handeln. Diese erfassen ein Muster des Unterbodens des Fahrzeugs auf elektromagnetischem Weg, sodass eine Klassifizierung des Fahrzeugs auf Grundlage des aufgenommenen Bodenmusters erfolgen kann.

Nach den Klassifizierungsschleifen 29 ist weiters eine Messvorrichtung 30 vorgesehen, die insbesondere zur Messung der Höhe, Breite und Länge des Fahrzeugs eingerichtet sein kann. Diese Messwerte können ebenfalls zur korrekten Klassifizierung des Fahrzeugs herangezogen werden.

In einem weiteren, nicht dargestellten, Ausführungsbeispiel kann eine Vorselektion mit einer zweiten, nicht eichfähigen dynamischen Fahrzeugwaage, insbesondere mit einer Fahrzeugwaage mit einem Toleranzbereich von 10% - 15%, vorgesehen sein, um eindeutig nicht überladene Fahrzeuge frühzeitig ausleiten zu können. Diese Vorselektion kann in der Ausleitungsfahrbahn 2 noch vor den Kennzeichenkameras 3, 4 vorgesehen sein und die Fahrzeuge auf eine weitere Ausleitungsfahrbahn umleiten, sodass die dynamische Fahrzeugwaage 6 nicht durch eindeutig nicht überladene Fahrzeuge blockiert wird.

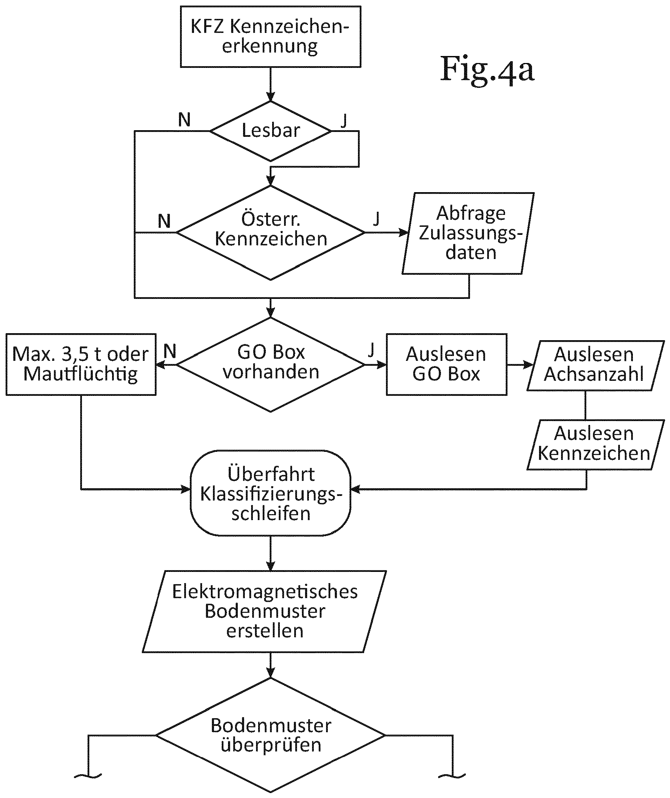

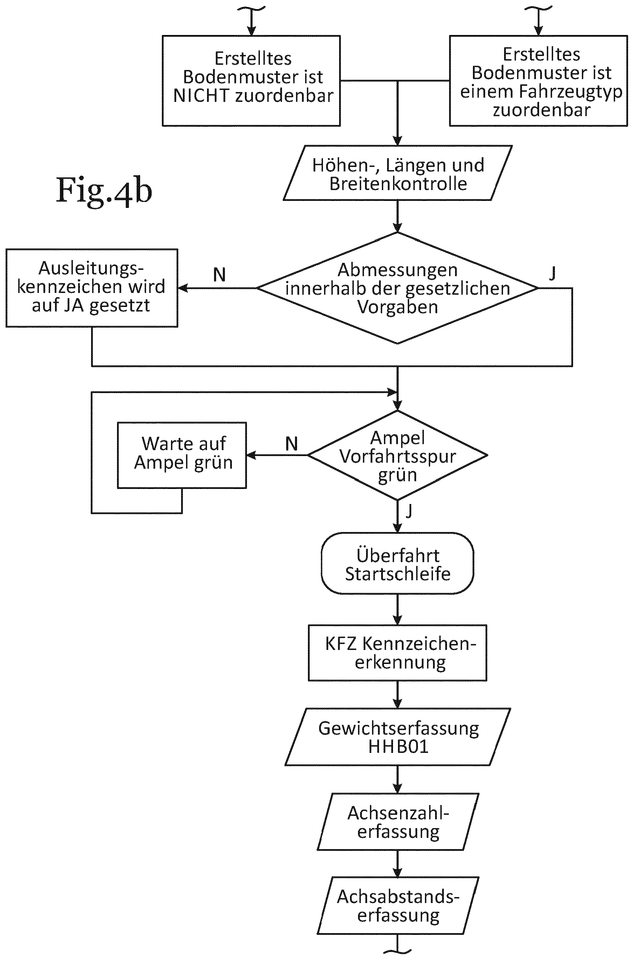

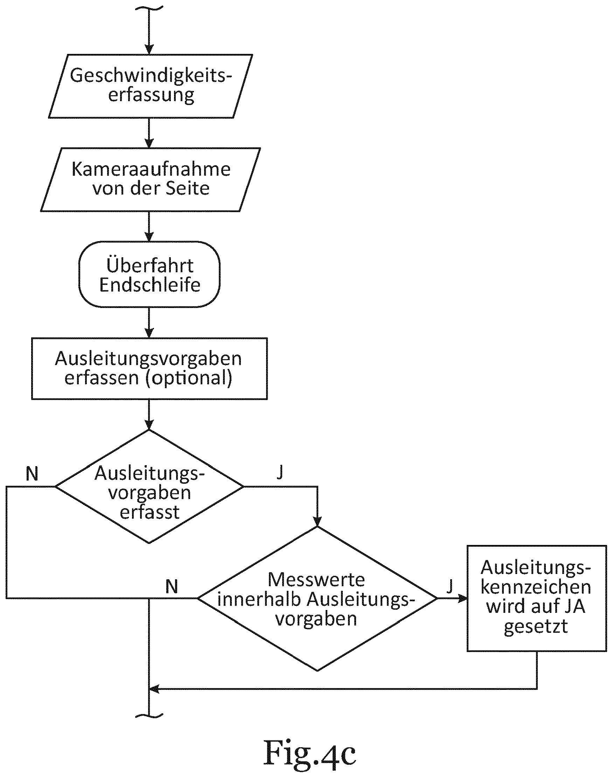

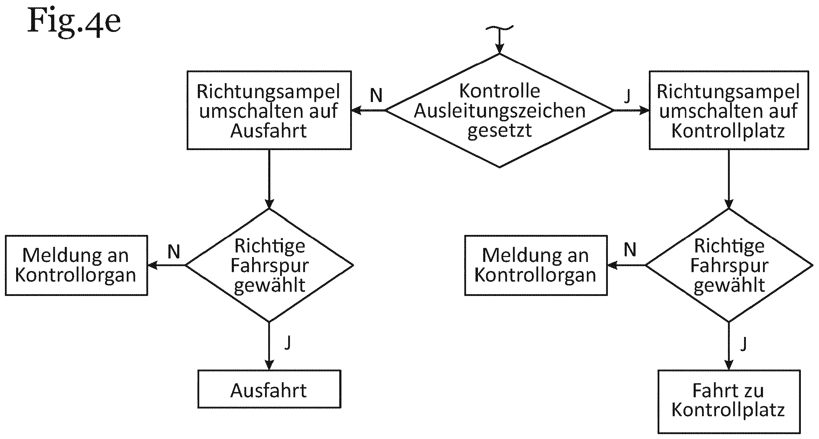

Die Figuren 4a - 4e zeigen ein weiteres Ausführungsbeispiel eines erfindungsgemäßen Verfahrens, welches teilweise dem in Fig. 2a - 2b gezeigten Verfahren entspricht. Nach der Auslesung der Go-Box überfährt das Fahrzeug jedoch zusätzliche Klassifizierungsschleifen 29, welche auf elektromagnetischem Weg ein Bodenmuster erstellen und überprüfen, ob dieses einem Fahrzeugtyp zuordenbar ist. Danach durchfährt das Fahrzeug eine Messvorrichtung 30, welche Höhe, Breite und Länge des Fahrzeugs bestimmt. In Folge überfährt das Fahrzeug die Einfahrtsschleife 10 und das Verfahren setzt fort wie im Ausführungsbeispiel nach Fig. 2a - 2b. Befinden sich die Abmessungen des Fahrzeugs außerhalb der gesetzlichen Vorgaben, so wird ein Ausleitungskennzeichen auf JA gesetzt und das Fahrzeug nach der dynamischen Waage 6 mittels der Richtungsampel 12 ausgeleitet.

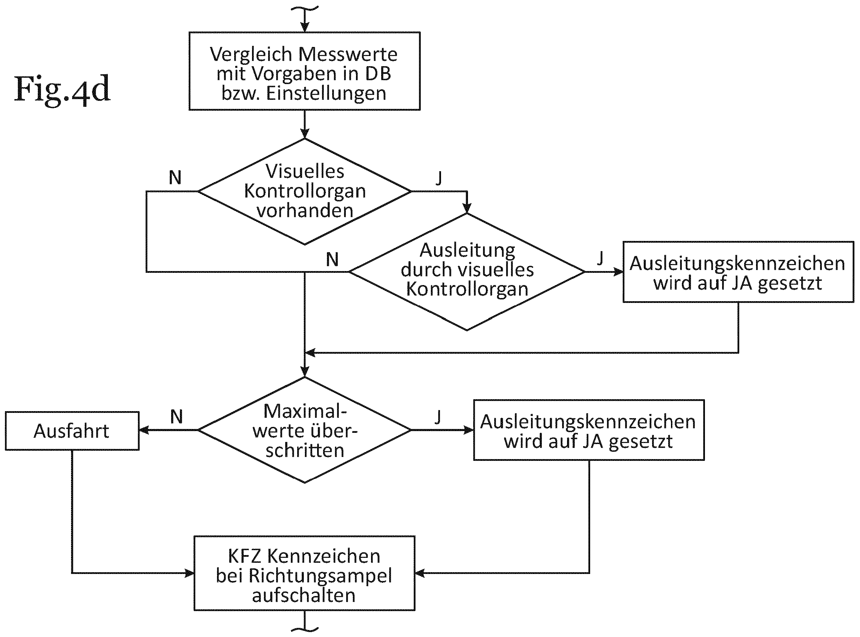

Fig. 4d - 4e zeigen weitere Details des erfindungsgemäßen Verfahrens. Die aufgenommenen tatsächlichen Messwerte des Fahrzeugs werden mit den gesetzlichen Vorgaben bzw. Einstellungen in der Datenbank verglichen. Ist nach der dynamischen Waage 6 ein visuelles Kontrollorgan 31 vorhanden, so erfolgt die Ausleitung des Fahrzeuges durch dieses, andererseits erfolgt die Ausleitung automatisch, und bei der Richtungsampel 12 wird zur Information des Fahrers des Fahrzeugs das betreffende Kennzeichen aufgeschaltet. Das Fahrzeug fährt danach entweder über die Ausfahrtsfahrbahn innerhalb Toleranz 13 zurück auf die Autobahn 1, oder über die Ausfahrtsfahrbahn außerhalb Toleranz 15 auf einen Kontrollplatz mit einem Gebäude 20.

Sowohl in der Ausfahrtsfahrbahn innerhalb Toleranz 13, als auch in der Ausfahrtsfahrbahn außerhalb Toleranz 15 sind Schleifen 14, 16 vorgesehen, die vorzugsweise als Induktionsschleifen ausgeführt sind. Diese detektieren das Befahren durch das Fahrzeug und geben eine Meldung an ein Kontrollorgan ab, sofern das Fahrzeug nicht die richtige Fahrspur gewählt hat.

Das erfindungsgemäße Verfahren ermöglicht die Detektierung und Klassifizierung von in Bewegung befindlichen Fahrzeugen. Die zu klassifizierenden Fahrzeuge werden über eine ebene und gerade Anfahrtsstrecke geleitet. In der Fahrbahn sind mehrere Induktionsschleifen eingegossen, die während der Überfahrt des Fahrzeuges die Fahrzeugcharakteristiken elektromagnetisch erkennen und mit gespeicherten Musterdaten in der Auswerteeinheit vergleichen, beispielsweise über Mauterfassungssysteme wie die Go-Box. Zu diesen Daten gehören die Fahrzeuglänge, die Fahrzeugbreite, die Bodenfreiheit, die Achsanzahl, der Achsabstand, der Achsentyp (Antriebsachse, Lenkachse, Liftachse), das Vorliegen von Doppelbereifung und dergleichen. Aufgrund dieser Parameter erfolgt eine Zuordnung zu definierten Fahrzeugtypen mit dem hinterlegten höchstzulässigen Gesamtgewicht und maximalen Achslasten entsprechend gesetzlicher Normen, wie beispielsweise dem österreichischen Kraftfahrzeuggesetz § 4 oder der EU-Richtlinie über grenzüberschreitenden Verkehr.

Zusätzlich werden Kameras montiert, die das Kennzeichen des Zugfahrzeuges und auch des Hängers auswerten und digital zu den Fahrzeugdaten speichern. Weitere Kameras fotografieren das Fahrzeug von der Seite, damit eine lückenlose Fotodokumentation des betreffenden Fahrzeuges erstellt wird. Schließlich kann auch eine separate Längen-, Breiten- und Höhenmessung erfolgen.

Aufgrund der ermittelten Daten durch die Schleifen, Fahrzeugsystemen wie der Go-Box, den Kameras, der Längen-, Breiten- und Höhenmessung und der eichfähigen Waage wird die genaue Fahrzeugtype ermittelt und dessen gesetzlich höchstzulässiges Gesamtgewicht mit dem gemessenen eichfähigen Gesamtgewicht verglichen. Der Vergleich erfolgt anhand von Achsabstand, Berechnung der mittleren Überfahrgeschwindigkeit, Achslasten, eichfähiges Gesamtgewicht und Achsenanzahl.

Die Erfindung beschränkt sich nicht auf das erfindungsgemäße Verfahren, sondern umfasst weiters eine Vorrichtung zur Durchführung des Verfahrens. Insbesondere erstreckt sich die Erfindung auf eine Vorrichtung zur Überprüfung des Beladungsgewichtes eines Fahrzeugs auf Zulässigkeit mittels einer dynamischen Fahrzeugwaage mit mehreren hintereinander angeordneten Wägezellen und einem Fahrzeugerkennungssystem zur Ermittlung des Fahrzeugtyps, wobei das Fahrzeugerkennungssystem optische und/oder induktive Messvorrichtungen zur Bestimmung von Achszahl, Achsabstand, Achsposition, dem seitlichen Profil, Fahrzeuglänge, Fahrzeugbreite, Fahrzeughöhe und/oder einem Unterbodenmuster des Fahrzeugs umfasst, die insbesondere als Kameras und/oder Schleifen ausgeführt sind, und wobei weiters Vorrichtungen zur Erfassung der Kennzeichen des Fahrzeugs und Abfrage nationaler Zulassungsdatenbanken, sowie gegebenenfalls zur Abfrage eines Mauterfassungssystems des Fahrzeugs vorgesehen sind.

Insbesondere beschränkt sich die Erfindung nicht auf die vorliegenden Ausführungsbeispiele sondern umfasst sämtliche Verfahren und Vorrichtungen im Rahmen der nachfolgenden Patentansprüche.

### Bezugszeichenliste

- 1: Autobahn
- 2: Ausleitungsfahrbahn
- 3: Kennzeichenkamera vorne
- 4: Kennzeichenkamera hinten
- 5: Überkopfscanner / Auslesung Go-Box
- 6: Dynamische Fahrzeugwaage HHB01
- 7: Kamera mit Achserkennung
- 8: Kennzeichenkamera vorne
- 9: Kennzeichenkamera hinten
- 10: Einfahrtsschleife
- 11: Ausfahrtsschleife
- 12: Richtungsampel
- 13: Ausfahrtsfahrbahn innerhalb Toleranz
- 14: Schleife innerhalb Toleranz
- 15: Ausfahrtsfahrbahn außerhalb Toleranz
- 16: Schleife außerhalb Toleranz
- 17: Gebäude
- 18: Externe Datenbankzentrale
- 19: Datenleitung
- 20: Gebäude
- 21: Ampel Anfahrtsspur
- 22: Richtungsanzeiger
- 23: Datenleitung bzw. Datenexport / Statistik per Internet
- 24: Gewichtsanzeige
- 25: Drucker
- 26: PC
- 27: Erste Datenbank
- 28: Zweite Datenbank
- 29: Klassifizierungsschleifen
- 30: Messvorrichtung
- 31: Kontrollorgan

## Patentansprüche

1. Verfahren zur Überprüfung des Beladungsgewichtes eines LKW auf Zulässigkeit mittels einer dynamischen Fahrzeugwaage mit mehreren hintereinander angeordneten Wägezellen und einem Fahrzeugerkennungssystem, wobei durch das Fahrzeugerkennungssystem der Fahrzeugtyp ermittelt wird, und danach die durch die dynamische Fahrzeugwaage ermittelten Achsdruckdaten mit jenen dem Fahrzeugtyp zugeordneten Daten verglichen werden,
wobei durch induktive Klassifizierungsschleifen (29) eine Aufnahme des Fahrzeugunterbodenmusters, insbesondere Anzahl und Abstand der Achsen, erfolgt, welche zur Klassifizierung des Fahrzeugs herangezogen wird,
**dadurch gekennzeichnet, dass** die gegenseitige Distanz der Achspaare durch die mehrere Wägezellen hintereinander aufweisende dynamische Fahrzeugwaage an Hand der jeweils belasteten Wägezelle ermittelt wird.

2. Verfahren zur Überprüfung des Beladungsgewichtes eines LKW auf Zulässigkeit nach Anspruch 1, **dadurch gekennzeichnet, dass** die dem Fahrzeugtyp zugeordneten Daten durch Prüfen des Fahrzeugkennzeichens und Rückfrage bei der Zulassungsbehörde ermittelt werden.

3. Verfahren zur Überprüfung des Beladungsgewichtes eines LKW auf Zulässigkeit nach Anspruch 2, **dadurch gekennzeichnet, dass** das Fahrzeugkennzeichen mittels einer optischen Erfassungseinrichtung ermittelt wird.

4. Verfahren zur Überprüfung des Beladungsgewichtes eines LKW auf Zulässigkeit nach einem der Ansprüche 1 bis 3, **dadurch gekennzeichnet, dass** der Fahrzeugtyp durch Auslesen der GO-Box bzw. anderer Mauterfassungssysteme ermittelt wird.

5. Verfahren zur Überprüfung des Beladungsgewichtes eines LKW auf Zulässigkeit nach einem der Ansprüche 1 bis 4, **dadurch gekennzeichnet, dass** zur Ermittlung des Fahrzeugtyps das Fahrzeug seitlich fotografiert und mit in einer Datenbank vorhandenen Fahrzeugbildern verglichen wird.

6. Verfahren zur Überprüfung des Beladungsgewichtes eines LKW auf Zulässigkeit nach einem der Ansprüche 1 bis 5, **dadurch gekennzeichnet, dass** die dem Fahrzeugtyp zugeordneten Daten durch Zählen der Achspaare und Prüfung der gegenseitigen Distanz ermittelt werden, wobei der zulässige Achsdruck einer gesetzlichen Norm entnommen wird.

7. Verfahren zur Überprüfung des Beladungsgewichtes eines LKW auf Zulässigkeit nach Anspruch 6, **dadurch gekennzeichnet, dass** die Anzahl der Achspaare mittels einer optischen Erfassungseinrichtung bestimmt wird.

8. Verfahren zur Überprüfung des Beladungsgewichtes eines LKW auf Zulässigkeit nach Anspruch 7, **dadurch gekennzeichnet, dass** die Anzahl der Achspaare und deren Position optisch, insbesondere mittels eines Laserabtastsystems ermittelt werden.

9. Verfahren zur Überprüfung des Beladungsgewichtes eines LKW auf Zulässigkeit nach einem der Ansprüche 1 bis 8, **dadurch gekennzeichnet, dass** die Lage des Auflagepunktes des Fahrzeugreifens auf der jeweiligen Wägezelle durch Vergleich mit dem zugeordneten Belastungskurvenverlauf ermittelt wird.

10. Verfahren zur Überprüfung des Beladungsgewichtes eines LKW auf Zulässigkeit nach einem der Ansprüche 1 bis 9, **dadurch gekennzeichnet, dass** die Daten den Fahrzeugen zugeordnet in einer gesonderten Datenbank gespeichert werden.

11. Verfahren nach einem der Ansprüche 1 bis 10, **dadurch gekennzeichnet, dass** durch eine Messvorrichtung (30) Höhe, Breite und Länge des Fahrzeugs gemessen werden, und diese Messwerte zur Klassifizierung des Fahrzeugs herangezogen werden.

12. Verfahren nach einem der Ansprüche 1 bis 11, **dadurch gekennzeichnet, dass** eine Vorselektion mit einer zweiten dynamischen Fahrzeugwaage vorgesehen ist, welche einen höheren Toleranzbereich aufweist, als die erste dynamische Fahrzeugwaage.

13. Vorrichtung zur Überprüfung des Beladungsgewichtes eines Fahrzeugs auf Zulässigkeit mittels einer dynamischen Fahrzeugwaage mit mehreren hintereinander angeordneten Wägezellen und einem Fahrzeugerkennungssystem zur Ermittlung des Fahrzeugtyps, wobei
a. das Fahrzeugerkennungssystem zur Klassifizierung des Fahrzeugs induktive Messvorrichtungen zur Bestimmung von Achszahl, Achsabstand, Achsposition und/oder einem Unterbodenmuster des Fahrzeugs umfasst, die als induktive Klassifizierungsschleifen (29) ausgeführt sind, sowie
b. Vorrichtungen zur Erfassung der Kennzeichen des Fahrzeugs und Abfrage nationaler Zulassungsdatenbanken, sowie gegebenenfalls zur Abfrage eines Mauterfassungssystems des Fahrzeugs vorgesehen sind,
c. wobei die Vorrichtung dazu ausgebildet ist, die durch die dynamische Fahrzeugwaage ermittelten Achsdruckdaten mit den, dem Fahrzeugtyp zugeordneten Daten zu vergleichen,
**dadurch gekennzeichnet, dass**
die Fahrzeugwaage dazu ausgebildet ist, die gegenseitige Distanz der Achspaare an Hand der jeweils belasteten Wägezelle zu ermitteln.

## Claims

1. A method for checking the load weight of a lorry for admissibility by means of a dynamic vehicle scale with several load cells arranged one behind the other and a vehicle identification system, wherein the vehicle type is determined by the vehicle identification system, and then the axle load data determined by the dynamic vehicle scale is compared with the data associated with the vehicle type,
wherein inductive classification loops (29) are used to record the pattern of the vehicle underbody, in particular the number of the axles and distance between them, which is used to classify the vehicle,
**characterized in that** the mutual distance between the axle pairs is determined by the dynamic vehicle scale with several load cells one behind the other on the basis of the respective loaded load cell.

2. The method for checking the load weight of a lorry for admissibility according to claim 1, **characterized in that** the data associated with the vehicle type are determined by checking the vehicle registration number and making enquiries with the registration authority.

3. The method for checking the load weight of a lorry for admissibility according to claim 2, **characterized in that** the vehicle registration number is determined by means of an optical detection device.

4. The method for checking the load weight of a lorry for admissibility according to one of claims 1 to 3, **characterized in that** the vehicle type is determined by reading out the GO-Box or other toll collection systems.

5. The method for checking the load weight of a lorry for admissibility according to one of claims 1 to 4, **characterized in that** in order to determine the vehicle type, the side of the vehicle is photographed and compared with vehicle images available in a database.

6. The method for checking the load weight of a lorry for admissibility according to one of claims 1 to 5, **characterized in that** the data associated with the vehicle type are determined by counting the axle pairs and checking the mutual distance, the admissible axle load being taken from a legal standard.

7. The method for checking the load weight of a lorry for admissibility according to claim 6, **characterized in that** the number of axle pairs is determined by means of an optical detection device.

8. The method for checking the load weight of a lorry for admissibility according to claim 7, **characterized in that** the number of axle pairs and their position are determined optically, in particular by means of a laser scanning system.

9. The method for checking the load weight of a lorry for admissibility according to one of claims 1 to 8, **characterized in that** the position of the point of contact of the vehicle tyre on the respective load cell is determined by comparison with the associated load curve profile.

10. The method for checking the load weight of a lorry for admissibility according to one of claims 1 to 9, **characterized in that** the data are stored in a separate database and associated with the vehicles.

11. The method according to one of claims 1 to 10, **characterized in that** the height, width and length of the vehicle are measured by a measuring device (30) and these measured values are used to classify the vehicle.

12. The method according to one of claims 1 to 11, **characterized in that** a preselection with a second dynamic vehicle scale is provided, which has a higher tolerance range than the first dynamic vehicle scale.

13. A device for checking the load weight of a lorry for admissibility by means of a dynamic vehicle scale with several load cells arranged one behind the other and a vehicle identification system for determining the vehicle type, wherein
a. the vehicle identification system for classifying the vehicle comprises inductive measuring devices for determining the number of axles, axle spacing, axle position and/or an underbody pattern of the vehicle, which are designed as inductive classification loops (29), as well as
b. devices for detecting the registration number of the vehicle and interrogating national registration databases, and optionally for interrogating a toll collection system of the vehicle are provided,
c. the device being designed to compare the axle load data determined by the dynamic vehicle scale with the data associated with the vehicle type,
**characterized in that**
the vehicle scale is designed to determine the mutual distance of the axle pairs on the basis of the load cell respectively loaded.

## Revendications

1. Un procédé de contrôle de la recevabilité du poids de charge d'un camion au moyen d'un pont-bascule dynamique avec plusieurs cabines de balances disposées les unes derrière les autres et un système de détection de véhicule, le type de véhicule étant déterminé par le système de détection de véhicule et les données de charge d'essieu déterminées par le pont-bascule dynamique étant ensuite comparées aux données associées au type de véhicule,
dans lequel des boucles de classification inductives (29) sont utilisées pour enregistrer le dessin du soubassement du véhicule, en particulier le nombre et l'espacement des essieux, qui est utilisé pour classifier le véhicule,
**caractérisé en ce que** la distance mutuelle entre les paires d'essieux est déterminée par le pont-bascule dynamique qui comporte plusieurs cabines de balances les unes derrière les autres sur la base de la cabine de balances respectivement chargée.

2. Le procédé de contrôle de la recevabilité du poids de charge d'un camion selon la revendication 1, **caractérisé en ce que** les données associées au type de véhicule sont déterminées en vérifiant la plaque d'immatriculation du véhicule et en effectuant des recherches auprès de l'autorité d'immatriculation.

3. Le procédé de contrôle de la recevabilité du poids de charge d'un camion selon la revendication 2, **caractérisé en ce que** la plaque d'immatriculation du véhicule est déterminée au moyen d'un dispositif de détection optique.

4. Le procédé de contrôle de la recevabilité du poids de charge d'un camion selon l'une des revendications 1 à 3, **caractérisé en ce que** le type de véhicule est déterminé par la lecture de la GO-Box ou d'autres systèmes de télépéage.

5. Le procédé de contrôle de la recevabilité du poids de charge d'un camion selon l'une des revendications 1 à 4, **caractérisé en ce que** pour déterminer le type de véhicule, le véhicule est photographié latéralement et comparé à des images de véhicules disponibles dans une base de données.

6. Le procédé de contrôle de la recevabilité du poids de charge d'un camion selon l'une des revendications 1 à 5, **caractérisé en ce que** les données associées au type de véhicule sont déterminées en comptant les paires d'essieux et en vérifiant la distance mutuelle, la charge d'essieu admissible étant tirée d'une norme légale.

7. Le procédé de contrôle de la recevabilité du poids de charge d'un camion selon la revendication 6, **caractérisé en ce que** le nombre des paries d'essieux est déterminée au moyen d'un dispositif de détection optique.

8. Le procédé de contrôle de la recevabilité du poids de charge d'un camion selon la revendication 7, **caractérisé en ce que** le nombre des paries d'essieux et leur position est déterminé optiquement, en particulier par un système de balayage laser.

9. Le procédé de contrôle de la recevabilité du poids de charge d'un camion selon l'une des revendications 1 à 8, **caractérisé en ce que** la position du point de contact du pneu du véhicule sur la cabine de balances respective est déterminée par comparaison avec la progression de la courbe de charge associée.

10. Le procédé de contrôle de la recevabilité du poids de charge d'un camion selon l'une des revendications 1 à 9, **caractérisé en ce que** les données sont enregistrées dans une base de données séparée et associées aux véhicules.

11. Le procédé selon l'une des revendications 1 à 10, **caractérisé en ce que** la hauteur, la largeur et la longueur du véhicule sont mesurées par un dispositif de mesure (30), et **en ce que** ces valeurs de mesure sont utilisées pour classifier le véhicule.

12. Le procédé selon l'une des revendications 1 à 11, **caractérisé en ce qu'**il est prévu une présélection avec un deuxième pont-bascule dynamique, qui présente une plage de tolérance plus élevée que le premier pont-bascule dynamique.

13. Le procédé de contrôle de la recevabilité du poids de charge d'un camion au moyen d'un pont-bascule dynamique avec plusieurs cabines de balances disposées les unes derrière les autres et d'un système de détection de véhicule pour déterminer le type de véhicule, dans lequel
a. le système de détection de véhicule pour classifier le véhicule comprend des dispositifs de mesure inductifs pour déterminer le nombre d'essieux, l'empattement, la position des essieux et/ou un schéma du bas de caisse du véhicule, qui sont réalisés en forme de boucles de classification inductives (29), ainsi que
b. des dispositifs pour enregistrer le numéro d'immatriculation du véhicule et interroger les bases de données nationales d'immatriculation, et, le cas échéant, pour interroger un système de télépéage du véhicule,
c. le dispositif étant conçu pour comparer les données relatives à la charge d'essieu déterminées par le pont-bascule dynamique avec les données attribuées au type de véhicule,
**caractérisé en ce que**
le pont-bascule est conçu pour déterminer la distance mutuelle des paires d'essieux sur la base de la cabine de balances respectivement chargée.
